# EUROPEAN PATENT SPECIFICATION

(11) **EP 3 748 203 B1**
(45) Date of publication and mention of the grant of the patent: **22.07.2026**
(21) Application number: 20177733.1
(22) Date of filing: 02.06.2020
(51) Int. Cl.: F16J 15/3296, F16J 15/06, G06K 19/07

(54) **A GASKET AND A METHOD FOR OBTAINING INFORMATION ON A GASKET**
DICHTUNG UND VERFAHREN ZUM ERHALTEN VON INFORMATIONEN ÜBER EINE DICHTUNG
JOINT D'ÉTANCHÉITÉ ET PROCÉDÉ D'OBTENTION D'INFORMATIONS SUR UN JOINT D'ÉTANCHÉITÉ

(30) Priority: 07.06.2019 FI 20195486
(43) Date of publication of application: 09.12.2020
(73) Proprietor: Tampereen Tiivisteteollisuus Oy, 33560 Tampere (FI)
(72) Inventor: Miettinen, Jarkko, 33480 Ylöjärvi (FI); Arpiainen, Aleksi, 33200 Tampere (FI); Niukkala, Jaakko, 40100 Jyväskylä (FI)
(74) Representative: Berggren Oy

(56) References cited:
- EP-A1- 3 103 738
- WO-A1-95/22467
- US-A1- 2005 189 408
- US-A1- 2008 258 401
- MELIA-SEGUI JOAN ET AL: "Ubiquitous moisture sensing in automaker industry based on standard UHF RFID tags", 2019 IEEE INTERNATIONAL CONFERENCE ON RFID (RFID), IEEE, 2 April 2019 (2019-04-02), pages 1 - 8, XP033554314, DOI: 10.1109/RFID.2019.8719092
- LOKESH A GUPTA ET AL: "Wireless temperature sensor for condition monitoring of mechanical seals", MICROWAVE CONFERENCE (EUMC), 2012 42ND EUROPEAN, IEEE, 29 October 2012 (2012-10-29), pages 424 - 427, XP032328191, ISBN: 978-1-4673-2215-7

## Description

### Technical field

The invention relates to a gasket and a method for obtaining Information on at least one ambient condition of a gasket. The gasket comprises at least a sealing portion and a transponder portion. In the method a transponder portion is attached with a sealing portion of a gasket.

### Background

Gaskets are typically used in many applications, for example to prevent leakage of a substance outside of a space, or prevent possibly harmful substances entering the space. As an example, motors have several gaskets for different sealing purposes such as keeping lubricating oil inside the motor.

Operating environments where gaskets are used may be very demanding. For example, temperature during operation of a machine may be very high so that the material of the gasket should withstand such temperatures.

It may also be desirable to obtain some information related to the gasket or the operation environment of the gasket. It may help installation personnel if the gasket could provide information related to the installation of the gasket so that the installation personnel could check that the gasket is properly installed. As another example, information related to wearing of the gasket and/or operating conditions of the gasket might help service personnel or a user to determine if there is a need to replace a used gasket with a new one. Such gaskets may have been provided with a sensor for monitoring the conditions and a transponder for delivering sensor data to an external interrogator device, such as an RFID reader.

The patent application US 2008/0258401 A1 discloses a seal arrangement comprising monitoring means and a seal portion. The monitoring means comprises at least one means for determining the integrity of said seal portion, said determining means being arranged to deliver a signal to at least one radio frequency identification means for producing an output signal in response to the integrity of the seal portion as determined by the said means for determining. The seal arrangement comprises separate elements for detecting, analysing and transmitting the status which the detector indicates.

The patent application EP 3 103 738 A1 discloses a leak detection system, process, and vacuum package. The vacuum package comprises a package wall and a radio frequency circuit configured for emitting a status signal, the status signal changing based on whether the package is in a first sealed condition or in a second non-sealed condition, the radio frequency circuit comprising at least one deformable portion. At least a portion of the package wall is configured to act upon the deformable portion and to move the deformable portion from a first configuration, corresponding to the package being in said first sealed condition, to a second configuration, corresponding to the package being in said second non-sealed condition. The leak detection system comprises a vacuum package and a reader configured for emitting a radio frequency activation signal and for receiving a status signal from the package.

The conference article "Ubiquitous moisture sensing in automaker industry based on standard UHF RFID tags" by Meliá-Seguí and Vilajosana discloses a car sealing water test to detect leaks in the sealings with RFID antennas based on moisture sensors. The paper presents first steps towards the development of ultra-low-cost passive sensors, allowing for ubiquitous moisture sensing in industrial scenarios. The proposal is based on ultra high frequency radio frequency identification standard off-the-shelf technologies. Specifically, it is proposed for automating water tests in the automaker industry. Other potential applications are agriculture and smart home. This paper only discloses a sensor and that a plurality of such sensors could be placed inside a car (the car trunk, the copilot floor and on top of the dashboard). Then a water test is carried on the car and the sensors are interrogated to find out whether the sensors are affected by moisture inside the car.

One problem in the gaskets which comprise a sensor and a transponder or some other electrical circuitry is that they are not intended to operate in harsh operating conditions.

### Summary

One aim of the present invention is to provide an improved gasket with a transponder so that the gasket can also be used in harsh operating conditions. There is also provided a method for manufacturing such a gasket and a method for using such a gasket. According to an embodiment the gasket comprises at least a sealing portion and a transponder portion. The transponder portion may be attached with the sealing portion or it may be beside the sealing portion. The transponder portion may be partly or totally embedded in the material which forms the sealing portion. The sealing portion may comprise more than one material, such as, for example, a layer of metal and a layer of ceramics. The transponder portion may be on a surface of the metal layer and may have a protruding element outside the sealing section. The protruding element may comprise an antenna and a microchip.

In accordance with an embodiment, the gasket also comprises a sealing portion configured to indicate a pressure affecting to the gasket. In accordance with an embodiment, the sensor portion is equipped with a conductor acting as a sensor measuring surface stress of the gasket. at least at those locations where the conductor is located. The conductor is composed of separate sections having one or more flanges so that the flanges do not form a galvanic contact until a sufficiently high pressure is affected on the flanges. In other words, the flanges are not galvanically in contact until the surface stress on the gasket is high enough. The sensor conductor is connected, for example, to an RFID integrated circuit equipped with terminals for tamper detection. When the sealing portion of the gasket is under a compression, the sensor conductor is designed to create a current conducting loop when the surface stress on the gasket is sufficient. When the transponder portion of the gasket is energized with an RFID signal, the tamper detection terminal is activated and the received backscattered signal contains data of the tamper-loop activation. This feature may enable a method to ensure correct installing of a gasket or other objects that require certain surface stress.

In accordance with an embodiment, the tamper-loop is intentionally broken before use and the conductive loop is formed when the gasket is under sufficient and substantially evenly distributed stress between flanges. If for some reason the conductive loop breaks after the successful installation, this information can be obtained by interrogating the transponder again with the RFID signal, thus acting as a switch. Similar arrangement can be used in other applications than gaskets that require stress measurement of surfaces, e.g. bolt torque.

According to a first aspect, there is provided a gasket comprising a sealing portion and a transponder portion, wherein the sealing portion is adapted to provide sealing between two entities, and the transponder portion is adapted to provide information related to the gasket to an interrogating device by forming a reflected interrogation signal based on an interrogation signal from the interrogating device, characterised in that the transponder portion comprises a part in which at least one property is dependent on one or more ambient conditions of the gasket, wherein the transponder portion is adapted to indicate by the reflected interrogation signal a status of at least one of the one or more ambient conditions.

In accordance with an embodiment, the sensor portion comprises a conductive loop having one or more flanges at which a conductivity of the conductive loop is lower than in other parts of the conductive loop.

In accordance with an embodiment, the conductivity at the one or more flanges is configured to change as a function of pressure affecting on the flanges, wherein a value of the conductivity is configured to be used as an indication of a quality of installation of the gasket.

In accordance with an embodiment, the transponder portion comprises a part in which at least one property is dependent on one or more ambient conditions of the gasket, wherein the transponder portion is adapted to indicate by the reflected interrogation signal a status of at least one of the one or more ambient conditions.

In accordance with an embodiment, the transponder portion comprises:
- a resonance circuit having a tuning element, wherein the tuning element is adapted to change at least one property of the resonance circuit as a function of at least one ambient condition of the gasket; and
- an identification element adapted to provide identity information related to the gasket.

According to a second aspect, there is provided a method for obtaining information on at least one ambient condition of a gasket which comprises a sealing portion and a transponder portion comprising transmitting an interrogation signal by an interrogator device towards a gasket to be received by the transponder portion of the gasket, receiving a back-scattered signal formed by the transponder portion by using the received interrogation signal, measuring strength of the backscattered signal, comparing the strength of the backscattered signal with strength of the transmitted signal, and determining at least one ambient condition of the gasket on the basis of the strength of the backscattered signal.

In accordance with an embodiment the method comprises:
- forming a resonance circuit to the gasket by forming a tuning element utilizing material having at least one property which is dependent on at least one ambient condition of the gasket so that at least one property of the resonance circuit changes as a function of at least one ambient condition of the gasket; and
- forming an identification element adapted to provide identity information related to the gasket.

In accordance with an embodiment the antenna and the microchip are used to construct a wireless transponder, which can be used as a sensoring device in the proximity of a gasket. Proximity in this context means that the wireless transponder is connected to the gasket but not completely and having the protruding element consisting at least an antenna and microchip.

An example of the wireless transponder (a.k.a. tag) is a so-called RFID transponder (radio frequency identification), which comprises an antenna and a microchip attached to it and connected to each other resistively, inductively or capacitively, both being on a supporting substrate material which can be plastic, fibreglass or metal but not limited to them. The wireless transponder may also be called as a tag, such as a RFID tag.

In this approach the RFID transponder having an antenna and microchip as a whole acts as a sensory device of ambient conditions. The transponder circuitry or part of it is exposed to ambient temperature and being effected by it, without having any external or internal components which are connected to the RFID transponder's microchip only to perform a sensory function.

Also there need not be any independent components in the RFID transponder or its parts to measure and relay ambient conditions to an external interrogator device.

### Brief description of the drawings

In the following the invention will be described in more detail with reference to the appended drawings, in which
- Fig. 1: shows an illustrative view of a gasket, in accordance with an embodiment;
- Fig. 2a: illustrates a gasket as a simplified top view, in accordance with an embodiment;
- Fig. 2b: illustrates the gasket of Fig. 2a as a simplified cross-sectional view, in accordance with an embodiment;
- Fig. 3: illustrates a simplified block diagram of a transponder, in accordance with an embodiment;
- Fig. 4: illustrates an example of a gasket installed on an installation surface as a cross-sectional view;
- Fig. 5: illustrates an example of a system for reading information from the transponder of the gasket;
- Fig. 6: depicts an example of a signal strength to temperature conversion curve;
- Fig. 7: shows a flow diagram of a method in accordance with an embodiment;
- Figs. 8a to 8c: show some embodiments of a sensor portion as a top view;
- Fig. 9a: illustrates as a cross-sectional view a detail of a sensor portion before installation;
- Fig. 9b: illustrates as cross-sectional view the detail of a sensor portion of Fig. 9a after installation; and
- Fig. 10: shows a simplified block diagram of a system in accordance with an embodiment.

### Detailed description

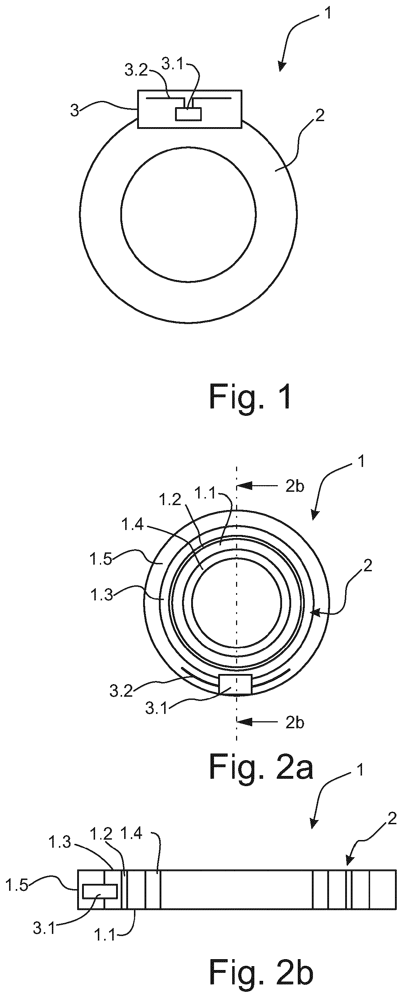

Fig. 1 shows an illustrative view of a gasket 1, in accordance with an embodiment. The gasket 1 comprises at least a sealing portion 2 and a transponder portion 3. The transponder portion 3 comprises a transponder 3.1 and an antenna 3.2 for the transponder 3.1. In this illustrative view the sealing portion 2 is round but in practical implementations the measures and form of the sealing portion 2 may be different from round form. One aim of the sealing portion 2 is to seal an element of a device so that leakage of a substance from the element outside the element is prevented, or vice versa i.e. the element is protected from possibly harmful substances which might enter the element if the gasket 1 were not used or if the sealing portion 2 of the gasket 1 were broken.

In the following, more detailed description of the principles and operation of the gasket 1 will be provided. Fig. 2a illustrates a gasket as a simplified top view, in accordance with an embodiment, and Fig. 2b illustrates the gasket of Fig. 2a as a simplified cross-sectional view. This example relates to spiral wound gaskets. The sealing portion 2 is constructed by two metal rings called inner and outer ring and a sealing material winding wound between the rings. This kind of gasket 1 can be formed by winding a metal sheet to a spiral to form a first sealing ring 1.1, adding sealing material 1.2 and winding another metal sheet to a spiral to form a second sealing ring 1.3 and possibly inserting a support ring 1.4 inside the first spiral and an installation element 1.5 outside the second spiral. This kind of gaskets can be used in, for example, process industry applications.

In this embodiment the transponder 3.1 is in resistive contact with the second sealing ring 1.3 of the gasket 1 and is designed to form impedance matching in the proximity of the large conductive surface of the second sealing ring 1.3. The carrier material in which the antenna 3.2 and the transponder 3.1 are placed can be e.g. an adhesive tape, which can be attached to the second sealing ring 1.3. The benefit of this attaching method is that the tag can be removed if necessary. The material resists constant temperature of 180°C and peaks up to 260°C and has moderate chemical resistance. The materials and transponder structures are not limited to the mentioned.

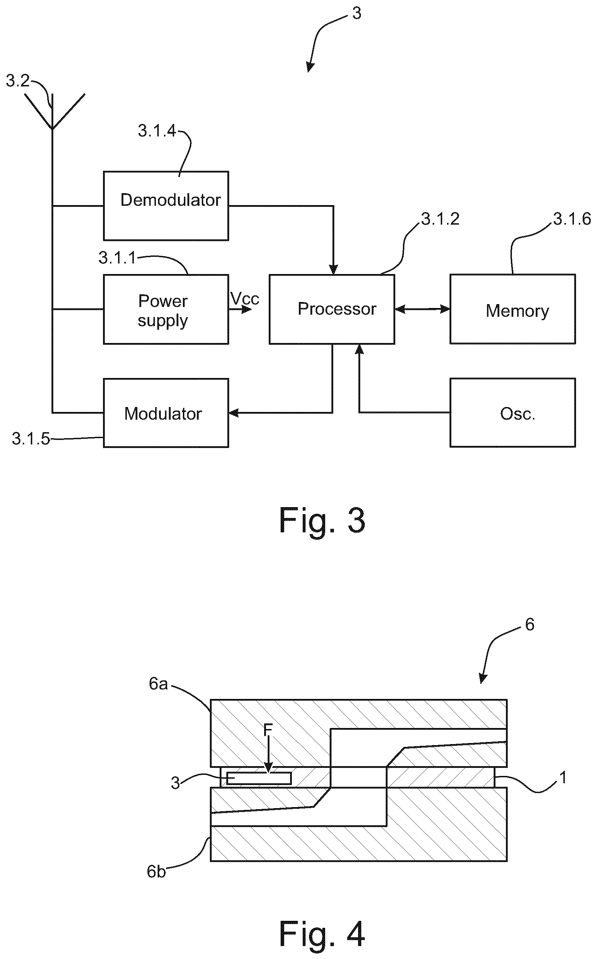

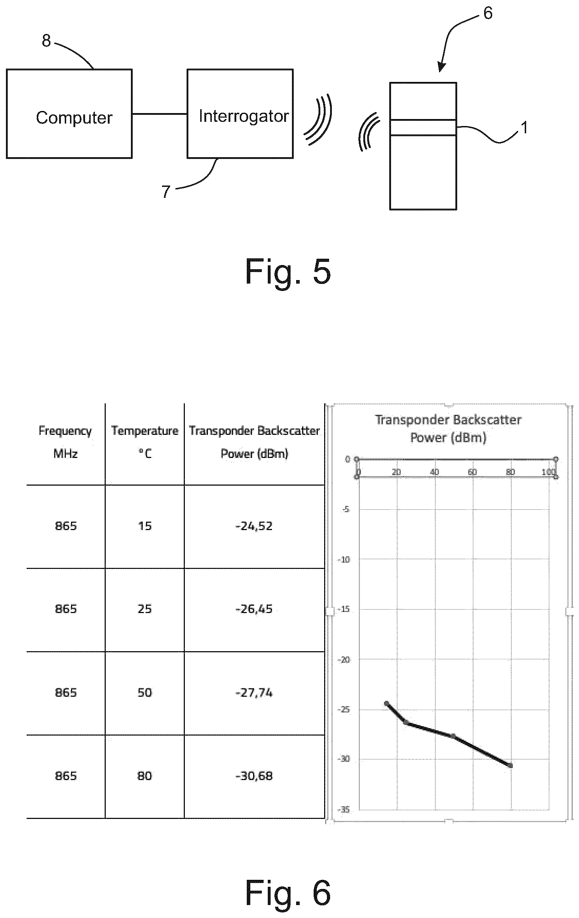

Fig. 3 illustrates an example of the transponder 3.1 as a simplified block diagram. The transponder 3.1 may comprise a power supplying circuitry 3.1.1 for supplying energy for the operation of the transponder 3.1. If the transponder 3.1 is a so-called passive type, i.e. not having an own energy source, the energy supplying circuitry 3.1.1 generates energy from signals (radio waves) transmitted from an interrogation device 7 (Fig. 5) and received by the antenna 3.2. The energy supplying circuitry 3.1.1 comprises, for example, a rectifier circuitry for rectifying radio waves, one or more capacitors for temporally storing electric energy obtained from the rectified radio waves, and possibly a regulator to regulate the voltage level Vcc of the electric energy to be provided to the other circuitry of the transponder 3.1. This energy or part of it can be used to power up the transponder 3.1 so that the transponder 3.1 can form a reply message to be delivered to the interrogator device 7 as a response to a query message or another indication from the interrogator device 7 to request information from the transponder 3.1. The transponder 3.1 may also comprise a processor 3.1.2 for controlling the operation of the transponder 3.1, and an oscillator 3.1.3 for providing clock signal for the processor 3.1.2. The transponder 3.1 may further comprise a demodulator 3.1.4 for demodulating information provided by the interrogator device (e.g. from the query message), and a modulator 3.1.5 for modulating information (e.g. the reply message) to be transmitted to the interrogator device 7. The transponder 3.1 may also comprise a memory 3.1.6 for storing data and computer code for the processor 3.1.2. The processor 3.1.2 and some or all other elements of the transponder 3.1 may be implemented in an integrated circuit (IC, a.k.a. a chip or a microchip).

The antenna 3.2 for the transponder 3.1 is formed so that it is insulated from the metallic sealing ring 1.1. One option for such insulation is to position the antenna 3.2 outside the sealing ring 1.1, for example on the surface of the installation element 1.3, if the material of the installation element 1.3 is not electrically conductive, or on the surface of the support ring 1.2, if the material of the installation element 1.3 is not electrically conductive. As another alternative, the antenna 3.2 may be embedded in the installation element 1.3 or in the support ring 1.2 assuming that the installation element 1.3/support ring 1.2 is not electrically conductive. The antenna 3.2 is electrically coupled with the transponder 3.1 and the energy supplying unit 3.1.1.

It should be mentioned that in some embodiments the antenna 3.2 may require a so-called ground plane, wherein the metallic part of the gasket 1 may operate as the ground plane for the antenna 3.2 and/or the transponder 3.1.

In accordance with an embodiment, the antenna 3.2 and the elements of the transponder 3.1 are attached to a carrier material, which can be, but is not limited to, plastic, rubber or fabric. The carrier material has preferably temperature resistance of over 100°C and resists chemicals such as oil, depending on the application. Such materials are for example polyethylene terephthalate (PET) or polyimide (PI), but the possible materials are not limited to these.

The antenna 3.2 can be a dipole antenna or a loop antenna or another type of antenna and the structure and type of the antenna 3.2 depends on the application where the transponder 3.1 will be utilized. For example, the antenna 3.2 may be a dipole antenna having meander lines or lines formed as arcs as radiation elements.

The antenna 3.2 and some other parts of the transponder 3.1 form a resonance circuit so that radio waves at a certain frequency or frequency range resonate with the resonance circuit and energy can move via the resonance circuit *inter alia* to the rectifier and the demodulator.

It should also be noted that there may be more than one antenna e.g. so that one antenna is for receiving the interrogation signal and the other antenna is for transmitting the reply message.

In accordance with another embodiment, the gasket 1 is formed from several sheets attached one upon the other. For example, the gasket 1 comprises an elastic layer 1.1, a metallic layer 1.2 on the elastic layer 1.1 and an insulating layer 1.3 covering the metallic layer. The transponder portion 3 can be embedded between two adjacent layers, e.g. between the metallic layer 1.2 and the insulating layer 1.3 or on the surface of the insulating layer 1.3, wherein the transponder portion 3 is protected by a protection layer implemented above the transponder portion 3.

It should be noted that there can also be other possibilities to implement the transponder portion 3 with the gasket 1 than those presented above.

In the following, the operation of the gasket 1, especially the transponder 3.1 will be described in more detail in accordance with an embodiment.

When the gasket 1 has been installed it is exposed to ambient conditions such as temperature, moisture, pressure, etc. In the following, it is assumed that the temperature is the condition to be surveillance. A change in temperature of the transponder portion 3 causes metallic conductor material of the antenna 3.2 and conductors and semiconductor parts in the transponder 3.1 to change their behaviour. By so it results to a change at least, but not necessarily only in the received signal strength (RSSI) of the transponder 3.1 when an external interrogator device 7 has provided the transponder 3.1 sufficient operating voltage by electromagnetic propagating waves in far-field conditions.

Fig. 6 illustrates an example of a result of a test where the gasket 1 according to an embodiment was exposed to temperature changes between +15°C and +80°C. Fig. 6 reveals that the signal strength of the backscattered signal by the transponder 3.1 of the gasket 1 during the test varied about 20% in respect to temperature changes. In this example, signal strength decreased when the temperature increased. Corresponding test could also be made to determine the signal strength response as a function of moisture, for example.

Changes in the ambient temperature around the transponder 3.1 can also be measured by the change in a Q-value of a resonant circuit of the transponder 3.1. The Q-value represents a maximum peak energy stored in the resonant circuit having at least an antenna contributing inductance to the circuit, and a microchip having at least the resonance and capacitance for the circuit to resonate at a certain frequency.

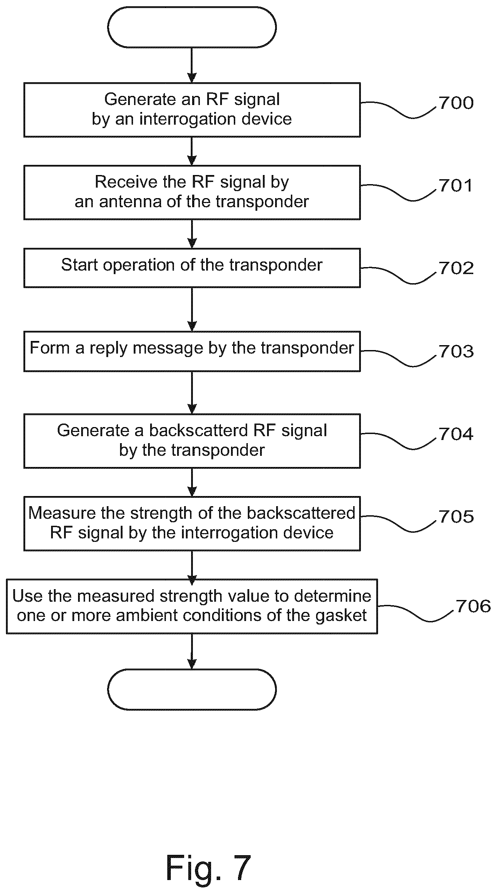

For example, an increase in the temperature reduces the conductivity of extrinsic semiconductor materials in the transponder 3.1 resulting to a decrease in response sensitivity to the interrogator device 7 which may also be demonstrated by the need of increased output power of a transmitter of the interrogator device 7 to provide sufficient threshold voltage for the transponder 3.1 to backscatter requested data from the transponder 3.1. In other words, the interrogator device 7 generates a signal at the desired operating frequency (block 700 in the flow diagram of Fig. 7). If the transponder 3.1 is within a range where the strength of the received signal (701) is high enough to start operation of the transponder 3.1, the processor 3.1.2 starts operation (702) and forms (703) a reply message which will be modulated and reflected back (704) as the backscattered signal. The signal strength of the backscattered signal depends on the temperature the transponder portion 3 is exposed to. This temperature should also reflect the temperature of the sealing portion 2 of the gasket 1. The interrogator device 7 measures (705) the received signal strength and uses that information to determine (706) the temperature.

It should be noted here that it may not be the interrogator device 7 which determines the temperature and/or other ambient condition of the gasket 1 but the interrogator device 7 may send the measurement result(s) to a computer 8 in which the measurement result(s) is/are processed and ambient condition(s) determined.

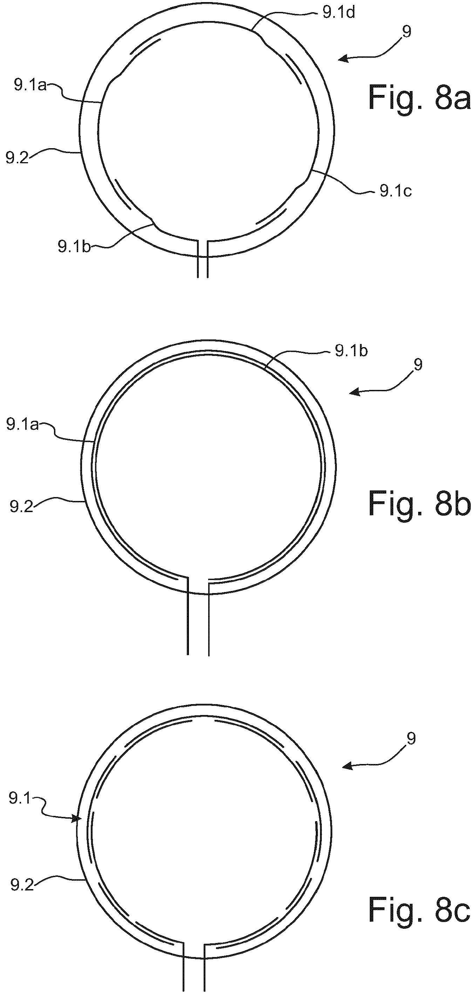

In the following, a system of another embodiment will be described with reference to Figs. 8a-8c, 9a, 9b and 10. In this embodiment, the system also comprises a sensor portion 9 for sensing pressure. Hence, the sensor portion 9 comprises a pressure sensitive circuit 9.1, formed on or in a substrate 9.2. The pressure sensitive circuit 9.1 will be installed on the surface of the gasket 1 so that the pressure sensitive circuit 9.1 is affected by substantially the same pressure than the gasket 1 when installed on a target device. There are many different alternatives to implement the pressure sensitive circuit 9.1. Basically, the pressure sensitive circuit 9.1 may be formed as a set of electrical conductors on or in a substrate 9.2 In accordance of some embodiments the electrical conductors can be formed directly on or in a gasket 1, wherein the substrate 9.2 is not needed.

Figs. 8a-8c illustrate some examples of forms of the pressure sensitive circuit 9.1. In the example of Fig. 8a the pressure sensitive circuit 9.1 has several sections 9.1a, 9.1b, 9.1c, 9.1d of conductors, which are formed by using electricity conducting material. The sections are in such a form that they are not touching each other wherein they are practically electrically insulated from each other. However, each section is at one end of the conductor adjacent to an end of another section so that when a pressing force is directed towards the surface of the substrate, the distance between such adjacent conductors will decrease and when the force is high enough, the conductors will come into contact i.e. will touch each other. This means that the conductivity of the pressure sensitive circuit 9.1 increases and this increased conductivity can be detected by an appropriate circuitry.

In the example of Fig. 8b the pressure sensitive circuit 9.1 has two sections 9.1a, 9.1b of adjacent conductors at a small distance from each other, without galvanic contact with each other. Therefore, they are practically electrically insulated from each other. When a pressing force is directed towards the surface of the substrate, the distance between such adjacent conductors will decrease and when the force is high enough, the conductors will come into contact i.e. will touch each other, as is the case with the embodiment of Fig. 8a. This means that the conductivity of the pressure sensitive circuit 9.1 increases and this increased conductivity can be detected by an appropriate circuitry. In other words, the adjacent conductors are not galvanically in contact until the surface stress on the gasket is high enough.

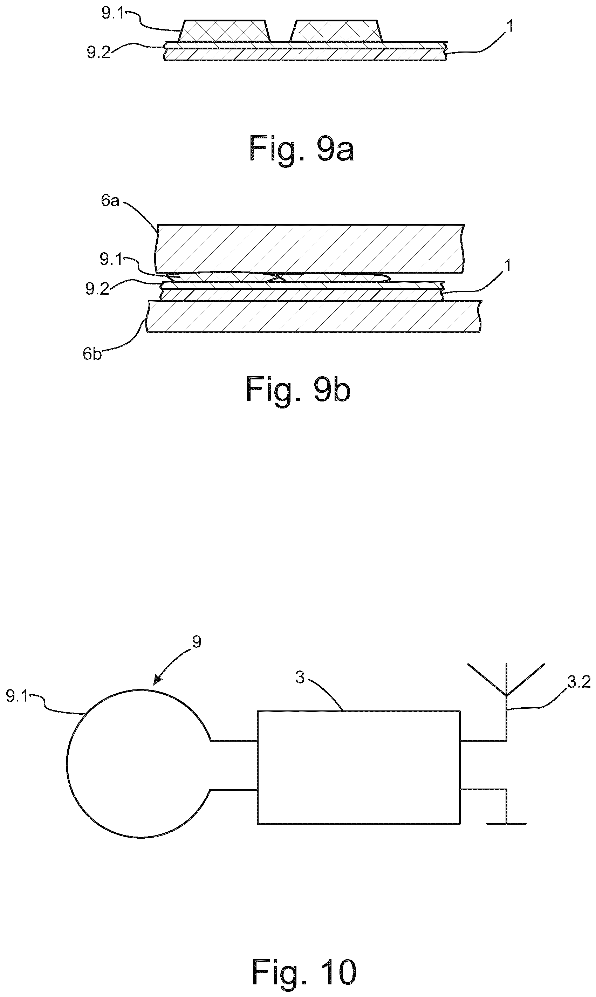

Fig. 9a illustrates as a cross-sectional view a detail of a sensor portion 9 before installation, and Fig. 9b illustrates as cross-sectional view the detail of a sensor portion 9 of Fig. 9a after installation. It can be seen that the cross-section changes due to the pressing force and may lead to a situation illustrated in Fig. 9b in which the two adjacent sections come into contact with each other which significantly increases the conductivity of the pressure sensitive circuit 9.1.

The gasket comprising sealing portion and a transponder portion equipped with the sensor portion 9 acts as a sensor configured to measure surface stress of the gasket. The conductors of the pressure sensitive circuit 9.1 and the transponder portion can be manufactured with processes including, but not limited to screen printing, ink dispensing, ink-jet printing, etching, milling and vaporization.

Fig. 10 shows a simplified block diagram of a system in accordance with an embodiment in which the pressure sensitive circuit 9.1 is utilized. The conductor(s) is/are connected to an RFID integrated circuit equipped with additional terminals for tamper detection represented in Fig. 10. When the sealing portion 2 of the gasket is under compression, that is the gasket is installed between, for example, two flanges (e.g. the first portion 6a and a second portion 6b of the machine 6) and the flanges are tightened to form a seal, the sensor conductor is designed to create a loop when the surface stress on the gasket 1 is sufficient and evenly distributed. When the transponder portion 3 of the gasket 1 is energized with an RFID signal, the tamper detection terminal is activated, and the received backscattered signal contains data of the tamper-loop activation. In other words, the tamper-loop acts as a two-way binary switch that indicates whether the surface stress is high enough or not. This feature enables a method to ensure correct installing of a gasket or other objects that require certain surface stress.

This principle can be developed to enable continuous monitoring of the gasket. Continuous measuring can be achieved by interrogating the transponder frequently to see whether the tamper-loop is active or not. Another method for obtaining constant monitoring of the gasket is to measure for example the resistance of the sensor conductor continuously or within desired intervals. Resistance measurement may be performed, for example, so that the transponder portion comprises an analogue-to-digital converter (ADC) or another circuitry which transforms an analogue signal representing the resistance to a digital value. This digital value may be transmitted along the backscattered signal to an interrogating device. Major changes in the resistance of the conductor can be interpreted as failure of the seal, that is usually a leak or a possibility for it. In some cases, the change in resistance may represent a disturbance in the process, e.g. rising temperature or decreasing pressure. These would be methods for enabling predictive maintenance of flanges with gaskets, which are usually maintained with a planned schedule or until failure.

In accordance with an embodiment, the pressure sensitive circuit 9.1, which may also be called as a tamper-loop, is intentionally broken before use and the conductive loop is formed when the gasket is under sufficient and evenly distributed stress between flanges. If for some reason the conductive loop breaks after the successful installing, this information can be obtained by interrogating the transponder again with the RFID signal, thus acting as a switch. Similar arrangement can be used in other applications than gaskets that require stress measurement of surfaces, e.g. bolt torque.

In accordance with an embodiment, the changes in the structure of the conductors is at least partly reversible, meaning that if the pressure towards the gasket is reduced, the adjacent conductors are no longer in galvanic contact and the conductivity is decreased. This change may be detectable by the tamper-loop, wherein if, for some reason, the tightness of the gasket decreases and a risk for leakages becomes higher, the system may be able to generate a notification of this and service personnel may fix the attachment of the gasket 1.

In accordance with an embodiment, the pressure sensitive circuit 9.1 comprises two or more mutually independent tamper-loops so that each tamper-loop is either conducting or not, depending on the pressure induced to the tamper-loop. This kind of structure may enable condition surveillance of separate sections of the gasket. As an example, if the gasket 1 is between two elements which are fixed together with several bolts and each bolt needs to be tightened to a certain tightness (not necessarily the same tightness for all bolts), one tamper-loop may then indicate the tightness of that bolt which is in the vicinity of that tamper-loop.

In an embodiment the interrogator device 7 and/or the computer 8 has been stored with or is able to access the signal strength to ambient condition conversion curve(s) or look-up table(s) corresponding with the gasket 1 in question. Hence, the interrogator device 7 may receive from the transponder 3.1 or is otherwise able to identify the gasket 1 and the corresponding conversion curve(s) or look-up table(s) and use it/them when determining the ambient condition(s) of the gasket 1.

The gasket 1 may need to be tested so that the temperature behaviour can be found out. This temperature behaviour can be stored in the interrogator device as a signal strength to temperature conversion curve or look-up table wherein the signal strength can be converted to temperature on the basis of the conversion curve or look-up table. This kind of operation may be performed for each individual gasket 1 but it may also be sufficient to form the conversion information for one or a few samples of a certain type of gasket and using the obtained conversion information in connection with gaskets of the same type of the same production batch. Fig. 6 illustrates an example of such signal strength to temperature conversion curve.

In accordance with an embodiment, the distance between the interrogator device 7 and the transponder 3.1 is also taken into consideration when converting the signal strength to temperature (or other ambient condition). The distance may be deduced by the interrogator device 7 by examining the round trip delay of the signal, i.e. the time-of-flight of the signal from the interrogator device 7 to the transponder 3.1 and back. The round trip delay measurement may be based on, for example, measuring the phase difference between the transmitted signal and the back-scattered signal.

In accordance with another embodiment, the distance between the interrogator device 7 and the transponder 3.1 is known or measured e.g. by using a distance measurement device, such as a laser rangefinder. Hence, the possible effect of the distance can be taken into consideration when converting the signal strength to temperature (or other ambient condition).

In accordance with yet another embodiment, it is assumed that the signal strength to temperature conversion curve or look-up table is valid when the distance corresponds with a certain predetermined value or value range. In this case the interrogator device 7 should be placed so that it is at a correct distance from the transponder 3.1.

It should also be noted that if there could be more than one transponder 3.1 near the interrogator device 7 and if the identity of the transponder 3.1 could not be verified on the basis of the backscattered signal, the distance between the interrogator device 7 and the transponder 3.1 to be examined should be kept so small that the interrogator device 7 uses signals received from that particular transponder 3.1 and not signals from other nearby transponders.

As was mentioned above, the temperature may not be the only ambient condition which affects the operation of the transponder 3.1 but also moisture, pressure, etc. ambient condition may have to be taken into account. It may therefore be not straightforward to differentiate effects of different ambient conditions solely on the basis of the signal strength measurement. However, certain applications may be such that some of the ambient conditions are known beforehand or at least limits of such ambient conditions. For example, if it is known that a device 6 having a gasket 1 is used in room temperature, the temperature could be ruled out from the determination and a certain constant temperature value can be used. Hence, the signal strength could mirror moisture content of the environment, for example. As another example, the transponder 3.1 could be coupled with a sensor such as a temperature sensor or moisture sensor, wherein the information provided by the sensor could be used and another ambient condition could be determined on the basis of the signal strength. In that case, it may be necessary to provide the conversion table in which the effect of the ambient condition measured by the sensor is taken into account. For example, if the curve of Fig. 6 represented a measurement result (in this case temperature dependency) in an environment where the moisture is constant and known, another measurement of the temperature dependency could be performed at another moisture value, and so on. Hence, several temperature dependency curves could be obtained for different moisture values. Then, during operation of the device 6 the transponder 3.1 could send information of the moisture, wherein the signal strength determined by the interrogator device 7 could be converted to temperature value by using those measured curves. If the measured moisture does not correspond with any of the predetermined curves, interpolation and/or extrapolation technique could be used to calculate the actual temperature from the signal strength.

In a more general case, the signal strength to temperature conversion curve(s) or look-up table(s) can be called as signal strength to ambient condition conversion curve(s) or look-up table(s).

The transponder 3.1 and the antenna 3.2 are placed on the gasket 1 in such way that it does not have an effect on the sealing properties of the gasket. Some gasket types may require adding a small projection to the geometry for which the tag could be attached to with an adhesive or mechanically with a specifically designed mount.

In accordance with an embodiment, the antenna of the tag has been designed to resonate at UHF (Ultra High Frequencies) and by so can be used either disconnected or connected to the possible conductive surface of the gasket 1. The gasket 1, if manufactured from metal, has a conductive surface on it, e.g. the metallic sealing ring 1.1.

In accordance with one arrangement, the transponder 3.1 is in close proximity of the gasket 1 but there is no resistive contact between them. In accordance with another arrangement, the antenna element 3.2 of the transponder 3.1 is resistively in contact with the conductive surface of the gasket 1 and is operating at a desired resonance frequency. The resonance frequency is created by using correctly designed geometry of the antenna elements, which aim to form ideal impedance matching to the transponder 3.1 and adaptation to the effect of larger conductive surface in the proximity of the transponder 3.1.

As an example of an implementation where a gasket may face harsh operating conditions is an internal combustion engine, where a head gasket is used between a cylinder head and a cylinder block of the internal combustion engine. Temperature of the cylinder block and the cylinder head may rise quite high during running of the engine, wherein also the head gasket has to withstand such temperatures. Sealing efficiency of the head gasket may depend on installation accuracy and tightness of the head gasket. Therefore, installation personnel has to be very careful so that the head gasket gets properly installed between the cylinder head and the cylinder block.

In accordance with an embodiment, the transponder section 3 of the gasket 1 is also adapted to sense pressure the gasket is pressed against an installation surface 5. Fig. 4 illustrates an example of a gasket 1 installed on an installation surface 5 as a cross-sectional view. The gasket 1 has been installed between a first portion 6a and a second portion 6b of a machine 6 to provide sealing between the first portion 6a and the second portion 6b. The arrow F illustrates the force compressing the gasket 1 against the installation surface 5.

Information content of the reply message may vary in different implement-tations and in different situations. As an example, the reply message may comprise an identifier of the transponder 3.1 so that the interrogator device 7 may identify the gasket 1 which sent the reply message.

In accordance with an embodiment in which the tamper-loop is utilized, the reply message includes a binary value indicating whether the gasket 1 is properly installed or not. If there are more than one tamper-loop, the reply message may include one binary value for each tamper-loop.

In a situation in which the resistance value is measured by the transponder portion 3, the reply message may include a value indicative of the resistance. However, the value as such may not directly reveal the resistance value but a look-up or conversion table may be utilized to convert the received value to a resistance value or to another value which indicates the compression force affecting towards the gasket 1.

The interrogator device 7 may communicate with a computer 8 in which the information obtained by the interrogator device 7 may be further processed and analysed. An example of a system for reading information from the transponder 3.1 of the gasket 1 by the interrogation device 7 and processing further by the computer 8 is illustrated in Fig. 5.

In the following some non-limiting examples of utilization of the gasket 1 of the present invention are provided.

Gaskets being installed can be identified by reading their identity. The use of correct gaskets after installation can be checked and assured that no incorrect gaskets have been installed. The identity of the gaskets may also be used after their lifecycle to identify the gaskets to be replaced and to find correct replacement gaskets.

Some further options for of utilization of the gasket 1 of the present invention are:
- Identifying flanges and joints used in the facility of the end-user;
- Managing the stock of gaskets in the facility of the manufacturer;
- Managing the stock of gaskets in the facility of the end-user;
- Managing the stock of gaskets in different intermediate or transport storages;
- Following the logistic chain of the gaskets;
- Creating a comprehensive database of the gaskets and flanges used in the facility of the end-user;
- Following the manufacturing process of the gaskets in the facility of the manufacturer;
- Powering other possible electronic devices used on the gasket.

The identification could be utilized in production, stocking and end-using of gaskets to enhance the operations and ensure safety. Both the manufacturer or provider of the gaskets and the end user may benefit by utilizing the present invention.

## Claims

1. A gasket (1) comprising a sealing portion (2) and a transponder portion (3), wherein the sealing portion (2) is suitable for providing sealing between two entities, and the transponder portion (3) is suitable for providing information related to the gasket (1) to an interrogating device (7) by forming a reflected interrogation signal based on an interrogation signal from the interrogating device (7), **characterised in that** the transponder portion (3) comprises a part in which at least one property is dependent on one or more ambient conditions of the gasket (1), wherein the transponder portion (3) is configured to indicate by the reflected interrogation signal a status of at least one of the one or more ambient conditions.

2. The gasket (1) according to claim 1, **characterised in that** the gasket (1) further comprises a sensor portion (9) configured to indicate a pressure affecting to the gasket (1).

3. The gasket (1) according to claim 2, **characterised in that** the sensor portion (9) comprises a pressure sensitive circuit (9.1) on a surface of the gasket (1) configured to change conductivity as a function of the pressure.

4. The gasket (1) according to any of the claims 1 to 3, **characterised in that** the gasket (1) comprises:
- a resonance circuit having a tuning element, wherein the tuning element is suitable for changing at least one property of the resonance circuit as a function of at least one ambient condition of the gasket (1); and
- an identification element suitable for providing identity information related to the gasket.

5. The gasket (1) according to any of the claims 1 to 4, **characterised in that** the gasket (1) further comprises:
- an identification element suitable for providing identity information related to the gasket.

6. The gasket (1) according to any of the claims 1 to 5, **characterised in that** the at least one ambient condition is one or more of the following:
- temperature;
- moisture;
- pressure.

7. The gasket (1) according to any of the claims 1 to 6, **characterised in that** the transponder portion (3) is configured to change the strength of the reflected interrogation signal to indicate the status of the at least one of the one or more ambient conditions.

8. A method for obtaining information on at least one ambient condition of a gasket (1) which comprises a sealing portion (2) and a transponder portion (3) comprising:
transmitting an interrogation signal by an interrogator device towards the gasket (1) to be received by the transponder portion (3) of the gasket (1); and
receiving a backscattered signal formed by the transponder portion (3) by using the received interrogation signal,
**characterised in that** the method further comprises:
examining the backscattered signal to find out indication of the at least one ambient condition; and
determining at least one ambient condition of the gasket (1) on the basis of the indication.

9. The method according to claim 8, **characterised in that** the method further comprises:
receiving the indication as a binary value; and
determining the status on the basis of the binary value.

10. The method according to claim 8 or 9, **characterised in that** the method further comprises:
comparing a strength of the backscattered signal with strength of the transmitted signal to determine the at least one ambient condition of the gasket.

11. The method according to claim 8, 9 or 10, **characterised in that** the method further comprises:
using a signal strength to ambient condition conversion information to determine the at least one ambient condition of the gasket.

12. The method according to any of the claims 8 to 11, **characterised in that** the at least one ambient condition is one or more of the following:
- temperature;
- moisture;
- pressure.

13. The method according to any of the claims 8 to 12, **characterised in that** the method further comprises:
measuring at least one ambient condition by a sensor of the gasket (1); and
retrieving information of the at least one ambient condition from the reflected interrogation signal.

## Patentansprüche

1. Dichtung (1), umfassend einen Dichtungsabschnitt (2) und einen Transponderabschnitt (3), wobei der Dichtungsabschnitt (2) geeignet ist, eine Dichtung zwischen zwei Einheiten bereitzustellen, und der Transponderabschnitt (3) geeignet ist, Informationen bezüglich der Dichtung (1) an eine Abfragevorrichtung (7) bereitzustellen, indem ein reflektiertes Abfragesignal basierend auf einem Abfragesignal von der Abfragevorrichtung (7) gebildet wird, **dadurch gekennzeichnet, dass** der Transponderabschnitt (3) einen Teil umfasst, in dem mindestens eine Eigenschaft von einer oder mehreren Umgebungsbedingungen der Dichtung (1) abhängt, wobei der Transponderabschnitt (3) konfiguriert ist, um durch das reflektierte Abfragesignal eine Statusangabe von mindestens einer der einen oder mehreren Umgebungsbedingungen anzugeben.

2. Dichtung (1) nach Anspruch 1, **dadurch gekennzeichnet, dass** die Dichtung (1) ferner einen Sensorabschnitt (9) umfasst, der konfiguriert ist, einen auf die Dichtung (1) einwirkenden Druck anzugeben.

3. Dichtung (1) nach Anspruch 2, **dadurch gekennzeichnet, dass** der Sensorabschnitt (9) eine druckempfindliche Schaltung (9.1) auf einer Oberfläche der Dichtung (1) umfasst, die konfiguriert ist, um die Leitfähigkeit als eine Funktion des Drucks zu ändern.

4. Dichtung (1) nach einem der Ansprüche 1 bis 3, **dadurch gekennzeichnet, dass** die Dichtung (1) Folgendes umfasst:
- eine Resonanzschaltung mit einem Abstimmelement, wobei das Abstimmelement geeignet ist, mindestens eine Eigenschaft der Resonanzschaltung in Abhängigkeit von mindestens einer Umgebungsbedingung der Dichtung (1) zu verändern; und
- ein Identifikationselement, das geeignet ist, Identitätsinformationen in Bezug auf die Dichtung bereitzustellen.

5. Dichtung (1) nach einem der Ansprüche 1 bis 4, **dadurch gekennzeichnet, dass** die Dichtung (1) ferner Folgendes umfasst:
- ein Identifikationselement, das geeignet ist, Identitätsinformationen in Bezug auf die Dichtung bereitzustellen.

6. Dichtung (1) nach einem der Ansprüche 1 bis 5, **dadurch gekennzeichnet, dass** die mindestens eine Umgebungsbedingung eines oder mehrere von Folgendem ist:
- Temperatur;
- Feuchtigkeit;
- Druck.

7. Dichtung (1) nach einem der Ansprüche 1 bis 6, **dadurch gekennzeichnet, dass** der Transponderabschnitt (3) konfiguriert ist, um die Stärke des reflektierten Abfragesignals zu ändern, um den Status von mindestens einer der einen oder mehreren Umgebungsbedingungen anzugeben.

8. Verfahren zum Erhalten von Informationen über mindestens eine Umgebungsbedingung einer Dichtung (1), die einen Dichtungsabschnitt (2) und einen Transponderabschnitt (3) umfasst, umfassend:
Übertragen eines Abfragesignals durch eine Abfragevorrichtung in Richtung der Dichtung (1), um von dem Transponderabschnitt (3) der Dichtung (1) empfangen zu werden; und
Empfangen eines vom Transponderabschnitt (3) gebildeten rückgestreuten Signals durch Verwendend das empfangene Abfragesignal, **dadurch gekennzeichnet, dass** das Verfahren ferner Folgendes umfasst:
Untersuchen des rückgestreuten Signals, um Angaben über mindestens eine Umgebungsbedingung herauszufinden; und
Bestimmen mindestens einer Umgebungsbedingung der Dichtung (1) basierend auf der Angabe.

9. Verfahren nach Anspruch 8, **dadurch gekennzeichnet, dass** das Verfahren ferner Folgendes umfasst:
Empfangen der Angabe als Binärwert; und
Bestimmen des Status basierend auf dem Binärwert.

10. Verfahren nach Anspruch 8 oder 9, **dadurch gekennzeichnet, dass** das Verfahren ferner Folgendes umfasst:
Vergleichen der Stärke des rückgestreuten Signals mit der Stärke des übertragenen Signals, um mindestens eine Umgebungsbedingung der Dichtung zu bestimmen.

11. Verfahren nach Anspruch 8, 9 oder 10, **dadurch gekennzeichnet, dass** das Verfahren ferner Folgendes umfasst:
Verwenden einer Umwandlungsinformation zwischen Signalstärke und Umgebungsbedingungen, um mindestens eine Umgebungsbedingung der Dichtung zu bestimmen.

12. Verfahren nach einem der Ansprüche 8 bis 11, **dadurch gekennzeichnet, dass** die mindestens eine Umgebungsbedingung eines oder mehrere von Folgendem ist:
- Temperatur;
- Feuchtigkeit;
- Druck.

13. Verfahren nach einem der Ansprüche 8 bis 12, **dadurch gekennzeichnet, dass** das Verfahren ferner Folgendes umfasst:
Messen mindestens einer Umgebungsbedingung durch einen Sensor der Dichtung (1); und
Abrufen von Informationen über die mindestens eine Umgebungsbedingung aus dem reflektierten Abfragesignal.

## Revendications

1. Joint d'étanchéité (1) comprenant une partie étanchéité (2) et une partie transpondeur (3), dans lequel la partie étanchéité (2) est adaptée pour fournir une étanchéité entre deux entités, et la partie transpondeur (3) est adaptée pour fournir des informations relatives au joint d'étanchéité (1) à un dispositif d'interrogation (7) en formant un signal d'interrogation réfléchi sur la base d'un signal d'interrogation provenant du dispositif d'interrogation (7), **caractérisé en ce que** la partie transpondeur (3) comprend une partie dans laquelle au moins une propriété est dépendante d'une ou plusieurs conditions ambiantes du joint d'étanchéité (1), dans lequel la partie transpondeur (3) est configurée pour indiquer par le signal d'interrogation réfléchi un état d'au moins l'une parmi la ou les conditions ambiantes.

2. Joint d'étanchéité (1) selon la revendication 1, **caractérisé en ce que** le joint d'étanchéité (1) comprend en outre une partie capteur (9) configurée pour indiquer une pression agissant sur le joint d'étanchéité (1).

3. Joint d'étanchéité (1) selon la revendication 2, **caractérisé en ce que** la partie capteur (9) comprend un circuit sensible à la pression (9.1) sur une surface du joint d'étanchéité (1), configuré pour modifier la conductivité en fonction de la pression.

4. Joint d'étanchéité (1) selon l'une quelconque des revendications 1 à 3, **caractérisé en ce que** le joint d'étanchéité (1) comprend :
- un circuit résonnant ayant un élément d'accord, dans lequel l'élément d'accord est adapté pour modifier au moins une propriété du circuit résonnant en fonction d'au moins une condition ambiante du joint d'étanchéité (1) ; et
- un élément d'identification adapté pour fournir des informations d'identité relatives au joint d'étanchéité.

5. Joint d'étanchéité (1) selon l'une quelconque des revendications 1 à 4, **caractérisé en ce que** le joint d'étanchéité (1) comprend en outre :
- un élément d'identification adapté pour fournir des informations d'identité relatives au joint d'étanchéité.

6. Joint d'étanchéité (1) selon l'une quelconque des revendications 1 à 5, **caractérisé en ce que** l'au moins une condition ambiante est une ou plusieurs des conditions suivantes :
- température ;
- humidité ;
- pression.

7. Joint d'étanchéité (1) selon l'une quelconque des revendications 1 à 6, **caractérisé en ce que** la partie transpondeur (3) est configurée pour modifier l'intensité du signal d'interrogation réfléchi afin d'indiquer l'état de l'au moins l'une parmi la ou les conditions ambiantes.

8. Procédé permettant d'obtenir des informations sur au moins une condition ambiante d'un joint d'étanchéité (1) qui comprend une partie étanchéité (2) et une partie transpondeur (3), comprenant :
la transmission d'un signal d'interrogation par un dispositif interrogateur vers le joint d'étanchéité (1) pour être reçu par la partie transpondeur (3) du joint d'étanchéité (1) ; et
la réception d'un signal rétrodiffusé formé par la partie transpondeur (3)à l'aide du signal d'interrogation reçu, **caractérisé en ce que** le procédé comprend en outre :
l'examen du signal rétrodiffusé pour détecter au moins une indication de l'au moins une condition ambiante ; et
la détermination d'au moins une condition ambiante du joint d'étanchéité (1) sur la base de l'indication.

9. Procédé selon la revendication 8, **caractérisé en ce que** le procédé comprend en outre :
la réception de l'indication sous forme d'une valeur binaire ; et
la détermination de l'état sur la base de la valeur binaire.

10. Procédé selon la revendication 8 ou 9, **caractérisé en ce que** le procédé comprend en outre :
la comparaison d'une intensité du signal rétrodiffusé avec l'intensité du signal émis pour déterminer l'au moins une condition ambiante du joint d'étanchéité.

11. Procédé selon la revendication 8, 9 ou 10, **caractérisé en ce que** le procédé comprend en outre :
l'utilisation d'informations de conversion d'une intensité de signal en condition ambiante pour déterminer l'au moins une condition ambiante du joint d'étanchéité.

12. Procédé selon l'une quelconque des revendications 8 à 11, **caractérisé en ce que** l'au moins une condition ambiante est une ou plusieurs des conditions suivantes :
- température ;
- humidité ;
- pression.

13. Procédé selon l'une quelconque des revendications 8 à 12, **caractérisé en ce que** le procédé comprend en outre :
la mesure d'au moins une condition ambiante par un capteur du joint d'étanchéité (1) ; et
la récupération d'informations de l'au moins une condition ambiante à partir du signal d'interrogation réfléchi.
